# EUROPÄISCHE PATENTANMELDUNG

(11) **EP 3 702 831 A1**
(43) Veröffentlichungstag der Anmeldung: **02.09.2020**
(21) Anmeldenummer: 19160269.7
(22) Anmeldetag: 01.03.2019
(51) Int. Cl.: G02C 13/00

(54) **DATENSATZ ZUR VERWENDUNG IN EINEM VERFAHREN ZUR HERSTELLUNG EINES BRILLENGLASES**

(71) Anmelder: Carl Zeiss Vision International GmbH, 73430 Aalen (DE)
(72) Erfinder: Gamperling, Michael, 89340 Leipheim (DE); Wietschorke, Helmut, 73433 Aalen (DE); Haas, Peter Johann, 73433 Aalen (DE)
(74) Vertreter: Altmann Stößel Dick Patentanwälte PartG mbB

(57) **Zusammenfassung**

Die vorliegende Erfindung betrifft einen auf einem Speichermedium gespeicherten Datensatz zur Verwendung in einem Verfahren zur Herstellung eines Brillenglases, ein Verfahren und ein Computerprogramm zur Erzeugung des Datensatzes, sowie ein Verfahren zur Herstellung des Brillenglases. Der Datensatz umfasst mindestens die folgenden Datenwerte:
- räumliche Koordinaten eines Referenzpunktes an jedem Auge (112, 112') des Nutzers;
- mindestens einen räumlichen Richtungsvektor zur Angabe mindestens einer Blickrichtung (120, 120') des Nutzers durch das Brillenglas; und
- eine räumliche Fassungsrandkurve (128, 128').

Mit den vorliegenden Verfahren kann die Herstellung des Brillenglases bereits nach einmaliger Erfassung eines Datensatzes für eine Anpassung der Brillengläser an den Nutzer der Brille und an die von dem Nutzer ausgewählte Brillenfassung (150) erfolgen. Dadurch kann nachträglich ein anderes Brillenglas als das ursprünglich vom Nutzer ausgewählte Brillenglas für die Brille verwendet werden, ohne dass für den Nutzer ein weiterer Datensatz für diese Anpassung ausgeführt werden muss.

## Beschreibung

### Gebiet der Erfindung

Die vorliegende Erfindung betrifft einen auf einem Speichermedium gespeicherten Datensatz zur Verwendung in einem Verfahren zur Herstellung eines Brillenglases, ein Verfahren und ein Computerprogramm zur Erzeugung des Datensatzes, sowie ein Verfahren zur Herstellung des Brillenglases.

### Stand der Technik

Aus dem Stand der Technik sind Datensätze, die auf einem Speichermedium gespeichert sind, welche in Verfahren zur Herstellung von Brillengläsern verwendet werden, zugehörige Verfahren und Computerprogramme zur Erzeugung der Datensätze sowie Verfahren zur Herstellung des Brillenglases bekannt.

Die Norm DIN EN ISO 13666:2013-10 definiert grundlegende Begriffe der Augenoptik, insbesondere Begriffe für Brillenglas-Halbfertigprodukte, die auch als "BrillenglasBlanks" oder einfach als "Blanks" bezeichnet werden, bezieht sich auf fertige Brillengläser, insbesondere auf eine Vielzahl von Parametern, welche sich auf die fertigen Brillengläser oder auf eine von einem Nutzer der Brille ausgewählte Brillenfassung zur zumindest Einbringung der Brillengläser beziehen, und legt Verfahren zur Anpassung der Brillengläser an den Nutzer der Brille und an die von dem Nutzer ausgewählte Brillenfassung fest. Unter Anwendung dieser Norm wird das Verfahren zur Anpassung der Brillengläser an die von dem Nutzer ausgewählte Brillenfassung üblicherweise im Rahmen eines Besuches des Nutzers bei einem Augenoptiker gemäß folgender Abfolge mit nachstehend angegebenen Verfahrensschritten durchgeführt:
- "Bestimmung der Korrektion": Durchführung der subjektiven Refraktion zur Bestimmung einer erforderlichen Korrektion von Fehlsichtigkeiten der Augen des Nutzers der Brille, wobei auf bereits bekannte messtechnisch erfasste Werte, zum Beispiel aus einem Brillenpass des Nutzers, zurückgegriffen und/oder wobei eine objektive Refraktion beider Augen des Nutzers durch Durchführung einer Refraktionsbestimmung mittels eines bekannten Refraktometers ermittelt werden kann;
- "Auswahl einer Brillenfassung": Auswahl mindestens einer Brillenfassung durch den Nutzer;
- "Bestimmung von Zentrierdaten": Erstellen einer Zentrieraufnahme mit von dem Nutzer aufgesetzter Brille unter habitueller Kopfhaltung und definierter Blickrichtung des Nutzers durch das Brillenglas, wobei bereits eine Festlegung eines Glastyps für die Brillengläser und damit implizit einer zugehörigen Zentriervorschrift zur Anpassung der Brillengläser an die Brillenfassung erfolgt; und
- "Glasauswahl": Auswahl eines Glases durch Nutzer und Augenoptiker, wobei die "Glasauswahl" Eigenschaften des Glases festlegt, insbesondere den Glastyp, einen Brechungsindex, eine Tönung und mindestens eine Beschichtung eines Brillenglases, wobei der Glastyp in die Bestimmung der Zentriervorschrift eingeht.

Nachteilig an dieser Abfolge ist, dass hierbei die Schritte "Bestimmung von Zentrierdaten" und "Glasauswahl" in der oben genannten Reihenfolge stattfinden. Hierbei kann häufig das Problem auftreten, dass die von dem Augenoptiker getätigte Auswahl des Glastyps und damit die Auswahl der zugehörigen Zentriervorschrift obsolet werden können. Ein derartiges Problem kann insbesondere dann auftreten, wenn der Nutzer nachträglich ein anderes Brillenglas auswählt oder wenn das ausgewählte Brillenglas nicht mit den zur Korrektion erforderlichen Parametern, z.B. im Hinblick auf Durchmesser, Stärke oder Ausstattung, lieferbar ist. Da unterschiedliche Glastypen mit verschiedenen Zentriervorschriften verknüpft sein können, geht damit eine Änderung der Zentriervorschrift einher, welche die Grundlage für die Bestimmung der Zentrierparameter darstellt. Durch diese Änderung werden die bereits bestimmten Zentrierdaten obsolet, und die Bestimmung der Zentrierdaten muss von dem Augenoptiker unter den geänderten Randbedingungen wiederholt werden, wofür unter Umständen eine weitere Durchführung der gesamten oben genannten Verfahrensschritte unter Beisein des Nutzers erforderlich werden kann.

Weiterhin besteht das Problem, dass Zentrierdaten, welche unter Anwendung der vorliegenden Norm ermittelt werden, eine reale Tragesituation einer Brille durch den Nutzer nur unzureichend erfassen, da in der Norm modellhafte Vereinfachungen und Vernachlässigungen vorgenommen werden. Dazu gehören insbesondere nur einseitig bestimmte, aber beidseitig verwendete Messwerte bei der Bestimmung des Hornhaut-Scheitelabstands, die Annahme einer "Scheibenebene", die auch als "Glasebene" bezeichnet werden kann, statt einer jeweils gekrümmten Oberfläche der Brillengläser, die Lage von Grenzflächen, die alleinige Verwendung eines Kastensystems anstelle einer vollständigen Randkurve der Brillengläser oder des Brillenglasblanks, die Annahme identischer Maße für beide Augen des Nutzers.

Ein vergleichbares Problem kann bei einer Berechnung von beiden Glasflächen der Brillengläser, die auch als "Glasrechnung" bezeichnet wird, vor einer Bearbeitung von Glasrohlingen im Werk auftreten. Die Glasrechnung geht gemäß der o.g. Norm von Zentrierdaten des jeweiligen Glases aus, insbesondere von den in der Norm sowie unten näher definierten Werten x, y, A, B, FSW und dem pantoskopischen Winkel, ermittelt hieraus eine dreidimensionale Anordnung von Scheibenebene und Augen, und bestimmt so möglichst optimale Verläufe der beiden Glasflächen für alle möglichen Blickrichtungen durch das Brillenglas. Da Zentrierdaten entsprechend der genannten Norm in Bezug auf ein vereinfachtes Modell angegeben werden, in welchem die beiden Brillengläser einer Brillenfassung durch zwei im Winkel zueinander stehende Scheibenebenen angenähert werden, können bei einer Rückrechnung Abweichungen in Bezug auf die tatsächliche Geometrie auftreten. Dieser Effekt tritt vor allem dann auf, wenn sich Hersteller der Brillengläser und Hersteller eines Zentriergerätes unterscheiden.

Ein weiteres Problem ergibt sich, wenn bei einer Vornahme von weiteren Korrekturen der Zentrierdaten insbesondere durch den Augenoptiker, die eine Korrektur einer Kopfdrehung des Nutzers in eine so genannte "saubere Geradausrichtung", auch als "Auto-X" Korrektur bezeichnet, oder eine Angleichung einer Kopfhaltung, z.B. eines Nickwinkels, bei einer Bildaufnahme an eine Referenz- oder Vergleichs-Kopfhaltung, die auch als "Auto-Y" Korrektur bezeichnet wird, umfassen kann. Diese Korrekturen werden in die Berechnung der Zentrierdaten einbezogen, so dass am Ergebnis ist mehr erkennbar ist, ob und welche Korrekturen angewandt wurden.

Gemäß der vorliegenden Norm werden die Zentrierdaten in Bezug auf ein Brillenfassungssystem und/oder ein Glaskoordinatensystem angegeben. Diese sind jedoch im Allgemeinen nicht exakt parallel und/oder senkrecht im Raum ausgerichtet. Eine Kopfseitenneigung kann daher dazu führen, dass eine Achslage eines Brillenglases in Trageposition von der Achslage abweicht, die bei der Durchführung einer Refraktionsbestimmung in Bezug auf den Kopf des Nutzers ermittelt wurde. Hierbei wird im Allgemeinen der Kopf des Nutzers in eine neutrale Stellung gezwungen, welche sich an der Vertikalen des verwendeten Refraktometers orientiert. Zudem orientiert sich der Augenoptiker bei der Herstellung der Brillengläser (Einschleifen) an der Horizontalen der Brillenfassung. Eine Kopfseitenneigung führt jedoch dazu, dass die Augen des Nutzers eine dadurch auftretende Neigebewegung ausgleichen, indem sie sich unwillkürlich um die Blickachse drehen. Damit sind die Augen gegenüber der Brillenfassung und den Brillengläsern verdreht; die Achslage weicht in Bezug auf das Auge um einen Betrag der Kopfseitenneigung oder um einen Teil davon von der Achslage während der Refraktionsbestimmung ab.

Genauso verhält es sich, wenn der Augenoptiker am Ende des Zentriervorganges eine so genannte "Stempelfigur" pauschal in eine vertikale Richtung verschiebt, wodurch er implizit auch die Richtung des Durchblicks durchs Brillenglas ändert. Diese Verschiebung wird jedoch dem Hersteller des Brillenglases nicht mitgeteilt, sondern die Berechnung der Zentriervorschrift und die darauf basierende Fertigung der Brillengläser erfolgt für eine von der angenommenen, habituellen Trageposition abweichenden Blickrichtung.

Vergleichbare Probleme können bei einer virtuellen Zentrierung auftreten. Hierbei wird von dem Augenoptiker zunächst ein virtuelles Modell eines Ausschnitts des Nutzers, insbesondere vom Kopf des Nutzers, das auch als "Avatar" bezeichnet wird, erstellt, und zwar unter den gleichen Bedingungen wie bei der Erstellung der Zentrieraufnahme. Die Erstellung des Avatars erfolgt jedoch ohne, dass der Nutzer zum Zeitpunkt der Erstellung des Avatars eine Brille trägt, insbesondere um die Auswahl der Brillenfassung räumlich und zeitlich vom dem Besuch des Nutzers bei dem Augenoptiker zu entkoppeln. Damit kann der Nutzer den Avatar mittels einer internetbasierten Anwendung derart verwenden, um beispielsweise von zu Hause aus dem Avatar Brillenfassungen, die als räumliches Modell verfügbar sind, aufzusetzen und auszuwählen. Da jedoch zum Zeitpunkt der Erstellung des Avatars der Nutzer keine Brille trägt, ist ein Bestimmen von Zentrierdaten nicht möglich. Die Glasauswahl kann ebenfalls, insbesondere aufgrund der zu diesem Zeitpunkt fehlenden Daten zu Material und Gestaltung der Brillengläser erst nach der erfolgten Auswahl der Brillenfassung erfolgen. Die Zentrierdaten können erst hieran anschließend bestimmt werden, entweder als so genannte "virtuelle Zentrierung" anhand eines auf den Avatar aufgesetzten räumlichen Modells der Brillenfassung oder als so genannte "reale Zentrierung" nach erfolgter Fertigung und Bereitstellung der Brillenfassung auf Basis des räumlichen Modells der Brillenfassung vor Ort beim Augenoptiker. Hierbei können weitere Probleme auftreten, wenn der Augenoptiker nur einige der verwendbaren Modelle für Brillenfassungen physisch vorrätig hält und daher die Zentrierdaten nicht vollständig ermittelt werden können. Nachteilig an beiden Ausgestaltungen ist, dass die Bestimmung der Zentrierdaten vor der Bereitstellung der Brillengläser erfolgen muss. Im Allgemeinen gibt es jedoch keine Möglichkeit, Zentrierdaten, die sich auf eine bestimmte Zentriervorschrift beziehen, umzurechnen auf andere Zentrierdaten, welche sich auf eine andere Zentriervorschrift beziehen, da die hierzu erforderlichen Daten und Vorschriften grundsätzlich nicht verfügbar sind.

WO 2005/069063 A1 offenbart eine Vorrichtung zum Ermitteln von Zentrierdaten für eine Brille mit einer von einem Computer aus ansteuerbaren, elektronische Bilder aufnehmenden Aufnahmeeinheit, die hinter einem Teilerelement angeordnet ist und mit einer Fixationseinrichtung. Die Fixationseinrichtung erzeugt zumindest ein Speckle-Muster. Durch die konstruktiven Eigenschaften der Fixationseinrichtung ist gewährleistet, dass der Blick des Probanden in eine vorbestimmte Richtung orientiert ist. Die Speckles können mit verschiedenen Mustern, z.B. einem kreuzförmigen Muster, superponiert werden. Die Erfindung betrifft zudem ein Verfahren zum Ermitteln von Zentrierdaten. Mit dem erfindungsgemäßen Verfahren und Vorrichtung wird es für Testpersonen unterschiedlichster Sehstärke ermöglicht, die relativen Zentrierdaten bei habitueller Haltung aus kurzer Entfernung zu messen.

DE 10 2008 012 268 A1 offenbart eine Vorrichtung und ein Verfahren zum dreidimensionalen Darstellen von Darstellungsbilddaten, insbesondere zum Positionieren eines Probanden, umfassend zumindest eine Bildaufnahmeeinrichtung, welche dazu ausgelegt ist, Bilddaten zumindest eines Teilbereichs eines Kopfes eines Probanden zu generieren, zumindest eine Bilddarstellungseinrichtung, welche dazu ausgelegt ist, Darstellungsbilddaten derart dreidimensional darzustellen, dass ein Fixationstarget dreidimensional dargestellt ist und/oder ein Teilbereich des Kopfes des Probanden beleuchtet ist und/oder Informationsdaten dreidimensional dargestellt sind, und zumindest eine Datenverarbeitungseinrichtung, welche dazu ausgelegt ist, mittels der Bilddaten Parameterdaten des Probanden zu bestimmen.

US 2010/0128220 A1 offenbart ein Verfahren und eine Vorrichtung zur Messung der Position von ausgezeichneten Punkten des Auges eines Nutzers. Das Verfahren umfasst hierbei einen Verfahrensschritt zur Aufnahme von Abbildungen in verschiedenen relativen Positionen des Nutzers, um damit Referenzpunkte des Auges zu ermitteln und den ausgezeichneten Punkt als Funktion der Abbildungen zu bestimmen. Die Werte der Haltungsparameter werden mittels eines positions-bestimmenden Elements erhalten, welches wenigstens eine bekannte geometrische Ausprägung, die am Kopf des Nutzers befestigt wird, aufweist. Jede der aufgenommenen Abbildungen umfasst eine Darstellung des positionsbestimmenden Elements. Der Haltungsparameter wird als Funktion der aufgenommenen Abbildungen und der bekannten geometrischen Ausprägung ermittelt.

US 2014/253875 A1 offenbart ein Verfahren zur Bestimmung okularer und optischer Messungen zur Herstellung und Anpassung von korrektiven Brillengläsern für einen Nutzer mittels einer Kamera. Das Verfahren verwendet ein Protokoll zur Rekonstruktion des Augensystems in drei Dimensionen durch Modellierung des Augensystems, um genaue okulare und optische Messungen bereitzustellen. Das Verfahren verwendet Testobjekte, welche mit dem Gesicht des Nutzers verbunden oder nicht verbunden sind.

### Aufgabe der Erfindung

Vor dem Hintergrund insbesondere der Norm DIN EN ISO 13666:2013-10 besteht die Aufgabe der vorliegenden Erfindung darin, einen auf einem Speichermedium gespeicherten Datensatz zur Verwendung in einem Verfahren zur Herstellung eines Brillenglases, ein Verfahren und ein Computerprogramm zur Erzeugung des Datensatzes, sowie ein Verfahren zur Herstellung des Brillenglases bereitzustellen, welche die aufgeführten Nachteile und Einschränkungen des Standes der Technik zumindest teilweise überwinden.

Insbesondere sollen es der Datensatz und die vorliegenden Verfahren ermöglichen, dass die Herstellung des Brillenglases bereits nach einmaliger Erfassung eines Datensatzes für eine Anpassung der Brillengläser an den Nutzer der Brille und an die von dem Nutzer ausgewählte Brillenfassung möglich wird. Dadurch kann nachträglich ein anderes Brillenglas als das ursprünglich vom Nutzer ausgewählte Brillenglas für die Brille verwendet werden, ohne dass für den Nutzer ein weiterer Datensatz für die genannte Anpassung ausgeführt werden muss.

### Offenbarung der Erfindung

Diese Aufgabe wird gelöst durch einen auf einem Speichermedium gespeicherten Datensatz zur Verwendung in einem Verfahren zur Herstellung eines Brillenglases, ein Verfahren und ein Computerprogramm zur Erzeugung des Datensatzes, sowie ein Verfahren zur Herstellung des Brillenglases mit den Merkmalen der unabhängigen Patentansprüche. Bevorzugte Ausgestaltungen, welche einzeln oder in Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist, d.h. auf eine Situation, in welcher A ausschließlich aus B besteht, als auch auf die Situation, in welcher, zusätzlich zu B, ein oder mehrere weitere Elemente in A vorhanden sind, beispielsweise Element C, Elemente C und D oder sogar weitere Elemente.

In einem ersten Aspekt betrifft die vorliegende Erfindung einen auf einem Speichermedium gespeicherten Datensatz zur Verwendung in einem Verfahren zur Herstellung eines Brillenglases. Der Datensatz, der in einem Verfahren zur Herstellung eines Brillenglases verwendet wird, umfasst mindestens die folgenden Datenwerte:
- räumliche Koordinaten eines Referenzpunktes an jedem Auge des Nutzers;
- mindestens einen räumlichen Richtungsvektor zur Angabe mindestens einer Blickrichtung des Nutzers durch das Brillenglas; und
- eine räumliche Fassungsrandkurve.

Damit bezieht sich der Datensatz insbesondere auf den Nutzer der Brille und die von dem Nutzer ausgewählte Brillenfassung, wobei das Brillenglas zur Einbringung in eine von einem Nutzer der Brille ausgewählte Brillenfassung oder als rahmenloses Brillenglas vorgesehen ist. Der Begriff der "Brille" bezeichnet im Rahmen der vorliegenden Erfindung ein beliebiges Element, welches zwei einzelne Brillengläser und eine Brillenfassung umfasst, wobei das Brillenglas zur Einbringung in eine Brillenfassung vorgesehen ist, welche von einem Nutzer der Brille ausgewählt wird. Alternativ kann das Brillenglas als rahmenloses Brillenglas verwendet werden. Unter einem "Brillenglas" wird im Rahmen der vorliegenden Erfindung eine optische Linse verstanden, welche gemäß DIN EN ISO 13666:2013-10 zur Messung und/oder Korrektion von Fehlsichtigkeiten und/oder zum Schutz des Auges oder zur Änderung eines Aussehens eines Nutzers dienen soll, wobei die optische Linse vor dem Auge des Nutzers, aber nicht in Kontakt mit dem Auge getragen wird. Hierbei kann ein Brillenglas einem oder mehreren "Glastypen" zugeordnet werden, ausgewählt aus einem Einstärken-Brillenglas, einem Mehrstärken-Brillenglas, insbesondere einem Zweistärken-Brillenglas oder einem Dreistärken-Brillenglas, einem Gleitsicht-Brillenglas oder einem degressiven Brillenglas. Andere Glastypen von Brillengläsern sind jedoch denkbar. Vorzugsweise kann das Brillenglas ein optisch transparentes Material, insbesondere ausgewählt aus Glas, oder einem transparenten organischen Kunststoff, jeweils mit unterschiedlichen, wählbaren Brechungsindizes, aufweisen. Anstelle des hier verwendeten Begriffs des "Nutzers" kann gleichbedeutend auch einer der Begriffe "Subjekt", "Brillenträger", "Benutzer" oder "Proband" verwendet werden.

Die "Brillenfassung" ist zur festen Aufnahme der beiden Brillengläser eingerichtet. Hierzu kann die Brillenfassung über eine, üblicherweise als "Brillenfassungsrahmen" bezeichneten Rahmen verfügen, welcher rechts- und linksseitig jeweils eine Aufnahme für je eines der beiden Brillengläser aufweist. Bevorzugt kann der Brillenfassungsrahmen ein nicht-transparentes Material, insbesondere ein festes, jedoch flexibles und leichtes Material aufweisen. Hierbei können "Vollrandbrillen", welche einen die beiden Brillengläser jeweils umschließenden Brillenfassungsrahmen aufweisen, von "Halbrandbrillen", in denen die beiden Brillengläser nur teilweise an eine Halterung angrenzen, und von "rahmenlosen Brillen", in welchen die Brillengläser jeweils über eine Bohrung zur Aufnahme einer Halterung verfügen, unterschieden werden. Darüber hinaus können weitere Komponenten vorgesehen sein, insbesondere mindestens ein Brillenbügel zum Tragen der Brille an einem Ohr und/oder mindestens eine Auflage (Pad) an einer Nase eines Nutzers der Brille. Eine Gesamtheit aus der Brillenfassung, der Brillenbügel und optional vorhandenen Pads kann auch als "Brillengestell" bezeichnet werden.

Im Falle von Vollrandbrillen ist jede Aufnahme für die Brillengläser geschlossen und kann somit bevorzugt eine im Inneren des Brillenfassungsrahmen umlaufende Nut aufweisen. Die Brillenfassung verfügt in diesem Falle somit über eine "Innenkontur", womit ein Profil einer im Inneren des Brillenfassungsrahmens umlaufenden Form bezeichnet wird. Auf diese Weise kann ein räumlicher Verlauf zumindest eines zur Aufnahme der Brillengläser eingerichteten Teils der Brillenfassung über eine so genannte "Fassungsrandkurve" angegeben werden. Die Fassungsrandkurve umfasst hierbei vorzugsweise eine Vielzahl von Datenpunkten, wobei die Vielzahl der Datenpunkte auch als "Punktwolke" bezeichnet werden kann. Hierbei umfasst jeder Datenpunkt der Fassungsrandkurve einen messtechnisch erfassten Randwert der Brillenfassung, wobei der "Randwert der Brillenfassung" eine die Innenkontur der Brillenfassung, insbesondere die im Inneren des Brillenfassungsrahmen umlaufende Nut, betreffende räumliche Koordinate angibt. Insbesondere kann hierbei jeder Datenpunkt der Fassungsrandkurve sich auf einen ausgewählten Abschnitt der Innenkontur beziehen, beispielsweise auf einen festgelegten Winkelbereich, bevorzugt 0,25° bis 10°, besonders bevorzugt 0,5° bis 2,5°, insbesondere 1° bis 2°, der Innenkontur der Brillenfassung. Damit kann die Fassungsrandkurve 30 bis 1500, bevorzugt 36 bis 1440, mehr bevorzugt 144 bis 720, insbesondere 180 bis 360, Datenpunkte aufweisen. Andere Arten der Festlegung der Datenpunkte der Fassungsrandkurve sind jedoch möglich, beispielsweise eine zufällige oder stochastische Festlegung oder eine Festlegung, bei welcher sich mehr Datenpunkte auf ausgezeichnete Punkte der Fassungsrandkurve, etwa auf Bereiche des Brillenfassungsrahmen mit einer im Vergleich zum gesamten Brillenfassungsrahmen erhöhten Krümmung, beziehen.

Insbesondere im Fall von Halbrandbrillen oder rahmenlosen Brillen kann jedoch eine Stützscheibe in den Brillenfassungsrahmen eingebracht werden. Der Begriff der "Stützscheibe" betrifft ein beliebiges Element aus einem leicht gewölbten, optisch transparenten Material, insbesondere ausgewählt aus Glas, oder einem transparenten organischen Kunststoff ohne optische Wirkung, welches dazu eingerichtet ist, um als Vorlage für die Kontur eines Brillenglases zu dienen. Gemäß ISO 8624:2011, ist eine Stützscheibe oder eine Demoscheibe ein zu Demonstrationszwecken in die Brillenfassung eingesetztes Brillenglas ohne dioptrische Wirkung. Die Stützscheibe, welche im Allgemeinen in Form einer leicht gewölbten Scheibe vorliegt, verfügt somit über eine Außenkontur, womit das Profil der an der Seite der Scheibe umlaufenden Form der Stützscheibe bezeichnet wird, die auch als "Glasrandfassung" bezeichnet wird. Im vorliegenden Fall von Halbrandbrillen oder rahmenlosen Brillen können somit die Datenpunkte der Fassungsrandkurve bevorzugt aus messtechnisch erfassten Randwerten der Fassung des Glasrandes oder von bereitgestellten Konstruktionsdaten der Fassung des Glasrandes ausgewählt werden. Für weitere Einzelheiten hierzu kann auf die obige Beschreibung in Bezug auf Vollrandbrillen verwiesen werden.

Der Begriff des "Datensatzes" bezeichnet hierbei eine Mehrzahl von Datenwerten, die, wie unten näher erläutert, auf messtechnisch erfassten Messwerten und/oder auf vorhandenen Daten, insbesondere auf gemäß einer Vorschrift berechneten Werten, basieren können, und die dadurch inhaltlich in einem Zusammenhang stehen, dass sie sich den Nutzer und die Brillenfassung beziehen. Erfindungsgemäß umfasst der Datensatz mindestens die folgenden Datenwerte:
- die räumlichen Koordinaten eines Referenzpunktes an jedem Auge des Nutzers;
- den mindestens einen räumlichen Richtungsvektor zur Angabe der mindestens einen Blickrichtung des Nutzers durch das Brillenglas; und
- die räumliche Fassungsrandkurve.

In einer besonders bevorzugten Ausgestaltung der vorliegenden Erfindung kann der Datensatz darüber hinaus zusätzliche Informationen umfassen, die sich auf eine oder mehrere Korrekturen der angegebenen Datenwerte, insbesondere in Bezug auf den Nutzer, die Brillenfassung oder das Brillenglas, beziehen. Die zusätzlichen Informationen können hierbei als mindestens ein weiterer Datenwert in den angegebenen Datensatz aufgenommen werden. Alternativ oder zusätzlich können die zusätzlichen Informationen in mindestens einen bereits vorhandenen Datenwert des Datensatzes einbezogen werden. Im Rahmen der vorliegenden Erfindung besonders bevorzugte Korrekturwerte sind:
- eine räumliche Änderung einer Kopfhaltung des Nutzers, insbesondere die Änderung
   ∘ einer habituellen Kopfhaltung, d.h. einer Korrektur einer Vorneigung des Kopfes des Nutzers;
   ∘ einer Drehung des Kopfes des Nutzers; und/oder
   ∘ einer Seitenneigung des Kopfes des Nutzer zum Zeitpunkt der Bildaufnahme, insbesondere definiert durch den Winkel der Fassungshorizontalen gegen die Horizontalebene im Raum;
- eine Änderung einer vertikalen Koordinate mindestens eines Durchblickpunkts, insbesondere eine Verschiebung einer Stempelfigur parallel zu der vertikalen Richtung in Fassungsebene der Brillenfassung;
- eine Änderung des räumlichen Richtungsvektors zur Angabe der mindestens einen Blickrichtung des Nutzers durch das Brillenglas relativ zu der durch den Nutzer bei einer Aufnahme der Blickrichtung eingenommen Blickrichtung, insbesondere eine Veränderung der Blickrichtung weg von der Hauptblickrichtung ins Unendliche hin zu einer tätigkeitsbezogenen häufigsten Blickrichtung.

Der Begriff "räumlich" bezeichnet im Zusammenhang mit der vorliegenden Erfindung Datenwerte, die sich über den dreidimensionalen Raum verteilen und sich daher nicht auf eine Ebene beschränken. Erfindungsgemäß liegt die Fassungsrandkurve in Form einer räumlichen Kurve vor, d.h. die Vielzahl der Datenpunkte der Fassungsrandkurve erstreckt sich in Form von Randwerten der Brillenfassung oder der Glasrandfassung über den dreidimensionalen Raum, so dass zur vollständigen Beschreibung jedes Datenwerts drei voneinander unabhängige Werte erforderlich werden. Die drei voneinander unabhängigen Werte können hierbei vorzugsweise in einem räumlichen Koordinatensystem angegeben werden, bevorzugt in einem kartesischen Koordinatensystem, in welchem die Koordinaten x, y und z senkrecht zueinander stehen. Andere Ausgestaltungen oder andere Koordinatensysteme, insbesondere ein zylindrisches Koordinatensystem, sind ebenfalls möglich. Damit liegt die Fassungsrandkurve im Allgemeinen insbesondere weder auf einer Scheibenebene noch auf einer Fassungsebene, wie jeweils in der Norm DIN EN ISO 13666:2013-10 definiert.

Erfindungsgemäß kann der Referenzpunkt an jedem Auge des Nutzers als Position in Form von drei voneinander unabhängigen Werten in dem gewählten räumlichen Koordinatensystem angegeben werden. Der Begriff der "Position" bezeichnet hierbei eine Lage des Referenzpunktes im Raum. Der Begriff des "Referenzpunktes" bezeichnet einen eindeutig bestimmbaren Punkt am Auge des Nutzers, welcher vorzugsweise mit der mindestens einen Blickrichtung des Nutzers durch das Brillenglas in Verbindung steht, bevorzugt als räumlicher Ausgangspunkt des räumlichen Richtungsvektors für die Angabe der räumlichen Richtungsvektor. Der Referenzpunkt für jedes der beiden Augen kann hierbei besonders bevorzugt ausgewählt werden aus einer Gruppe umfassend eine Pupillenmitte, einen Pupillenreflex, einen Hornhautscheitel (Cornea apex) oder einem Augendrehpunkt. Hierbei kann der Datenwert für die Position jedes der beiden Referenzpunkte des Nutzers vorzugsweise mittels Bildverarbeitung bestimmt werden. Hierfür können besonders bevorzugt die Pupillenmitte, der Pupillenreflex und/oder der Hornhautscheitel aus mindestens jeweils zwei Aufnahmen des Nutzers, in welchen zumindest eine der beiden Pupillen oder der Hornhautscheitel erkennbar ist, ermittelt werden. Hierzu können, wie unten näher beschrieben, die zumindest eine frontale Aufnahme des Nutzers und die jeweils mindestens eine seitliche Aufnahme des Nutzers eingesetzt werden. Die "Pupille" bezeichnet hierbei eine in jedem Auge vorhandene Eintrittsöffnung, durch welche Strahlung in Form von Licht in das Innere des Auges eintreten kann. Der Fachmann kann den Augendrehpunkt auf bekannte Weise ermitteln.

In umgekehrter Richtung kann die Pupille als Austrittsöffnung betrachtet werden, durch welche eine Blickrichtung des Nutzers aus dem Auge durch das Brillenglas auf die Umgebung festgelegt werden kann. Zur Angabe einer Blickrichtung des Nutzers wird erfindungsgemäß ein "räumlicher Richtungsvektor" angegeben, der neben einem räumlichen Ausgangspunkt eine Richtung in Form von drei voneinander unabhängigen Werten erfordert. In dem kartesischen oder dem zylindrischen Koordinatensystem kann die Blickrichtung zum Beispiel mit der Richtung der Koordinate z identifiziert werden, während die übrigen beiden Koordinaten senkrecht hierzu stehen. Andere Arten der Angabe des räumlichen Richtungsvektors für die Blickrichtung sind jedoch möglich. Der Begriff der "Blickrichtung" bezeichnet hierbei eine räumliche Richtung, in welche der Nutzer der Brille durch das Brillenglas blickt. Hierbei kann, wie üblich, vorzugsweise eine so genannte "Nullblickrichtung" verwendet werden, die als Blickrichtung in waagerechter Richtung durch das Brillenglas hindurch geradeaus auf ein unendlich weit entferntes Sehziel festgelegt ist. Besonders bevorzugt ist hierbei, dass die Blickrichtungen beider Augen parallel zueinander verlaufen. Hiervon kann insbesondere eine tätigkeitsspezifische Blickrichtung des Nutzers, welche der Nutzer nur bei Vornahme mindestens einer ausgewählten Tätigkeit annimmt, unterschieden werden. Darüber hinaus können bei Mehrstärkengläsern oder bei Gleitsichtbrillen mindestens zwei Hauptblickrichtungen des Nutzers, beispielsweise für den Blick in die Ferne ("Fernblickrichtung"), in die Nähe ("Nahblickrichtung")und ggf. in einen dazwischen liegenden Bereich, angegeben werden. In einer bevorzugten Ausgestaltung können Blickrichtungen des Nutzers und, falls zutreffend, die eine oder mehreren weiteren Blickrichtungen, zum Beispiel den tätigkeitsspezifischen Blickrichtungen messtechnisch bestimmt werden, vorzugsweise mittels der in WO 2005/069063 A1 dargestellten Verfahren und Vorrichtungen.

Erfindungsgemäß wird für alle Datenwerte des Datensatzes, der in dem Verfahren zur Herstellung des Brillenglases eingesetzt wird, d.h. für die räumlichen Koordinaten des Referenzpunktes an jedem Auge des Nutzers, für den mindestens einen räumlichen Richtungsvektor zur Angabe einer Blickrichtung des Nutzers durch das Brillenglas und für die räumliche Fassungsrandkurve, insbesondere der Brillenfassung oder der Glasrandfassung, jeweils dasselbe räumliche Koordinatensystem verwendet. Auf diese Weise werden sowohl die Positionen beider Referenzpunkte an jedem Auge des Nutzers, die Blickrichtung des Nutzers durch das Brillenglas als auch die Fassungsrandkurve, insbesondere der Brillenfassung oder der Glasrandfassung, innerhalb des gewählten räumlichen Koordinatensystems in eine feste Beziehung zueinander gebracht. In einer besonders bevorzugten Ausgestaltung der vorliegenden Erfindung wird für alle Datenwerte des Datensatzes jeweils dasselbe räumliche Koordinatensystem verwendet, so dass alle Datenwerte des Datensatzes in Bezug auf dasselbe räumliche Koordinatensystem angegeben werden. In dieser bevorzugten Ausgestaltung der vorliegenden Erfindung kann der Datensatz somit ohne Iteration erstellt werden, d.h. vorzugsweise kann eine einmalige Bestimmung der Datenwerte des Datensatzes genügen, damit dieser in einem Verfahren zur Herstellung des Brillenglases verwendbar ist.

Aus den genannten Datenwerten und vorzugsweise aus den Korrekturwerten kann damit eindeutig und reproduzierbar ein so genannter "Durchblickpunkt" als Schnittpunkt der Blickrichtung des Nutzers mit einer augenseitigen Rückfläche des Brillenglases ermittelt werden. Für den Fall, dass mindestens zwei Blickrichtungen existieren, kann folglich ein Durchblickpunkt für jede der mindestens zwei Blickrichtungen angegeben werden. Der erfindungsgemäß vorgeschlagene Datensatz, welcher mindestens die oben angegebenen Datenwerte umfasst, ist unabhängig vom Glastyp und der davon bestimmten Zentriervorschrift. Damit kann der mindestens eine Durchblickpunkt insbesondere dazu verwendet werden, um hieraus unter Berücksichtigung des gewählten Glastyps jederzeit Zentrierdaten zu bestimmen. Der Begriff der "Zentrierdaten" bezeichnet somit einen aus dem Datensatz ermittelter weiterer Satz von Zentrierwerten, die zur Herstellung der Brillengläser aus einem Brillenglasrohling unter Berücksichtigung des Nutzers der Brille sowie der von dem Nutzer ausgewählten Brillenfassung verwendet werden. Dienen zum Beispiel in einem Gleitsichtbrillenglas die Fernblickrichtung und eine Nahblickrichtung als die beiden Blickrichtungen, so beschreiben jeweils zugehörige Durchblickpunkte durch das Gleitsichtbrillenglas den Fernzentrierpunkt und den Nahzentrierpunkt. Jede andere Anordnung von mindestens zwei verschiedenen Blickrichtungen ist jedoch denkbar.

Erfindungsgemäß genügt die Angabe der durch den vorgeschlagenen Datensatz umfassten Datenwerte vollständig, um die für die Herstellung der Brillengläser erforderlichen Zentrierdaten eindeutig ermitteln zu können, auch im Falle, dass nach Erzeugung des Datensatzes noch eine Änderung der Glasauswahl auftreten sollte. Vorzugsweise können die Zentrierdaten zeitlich unabhängig von der Bestimmung der Datenwerte aus dem, vorgeschlagenen Datensatz ermittelt werden. Insbesondere kann dies durch den Augenoptiker erfolgen, wenn er ein rohrundes Glas in einen Schleifapparat einspannt, um den Rand des Brillenglases entsprechend der Fassungsradkurve zu bearbeiten.

In einer besonders bevorzugten Ausgestaltung können somit die Datenwerte des hierein vorgeschlagenen Datensatzes dazu verwendet werden, um mindestens einen, bevorzugt alle, der folgenden bei der Herstellung des Brillenglases üblicherweise eingesetzten Zentrierwerte zu erhalten:
- Abstand des Hornhautscheitels des jeweiligen Auges zu dem Durchblickpunkt einer Blickrichtung durch das Brillenglas;
- Abstände der Durchblickpunkte zu Geraden durch innerste Punkte der Fassungsrandkurven;
- Abstände der Durchblickpunkte zu Geraden durch unterste Punkte der Fassungsrandkurven;
- Scheibenlänge und Scheibenhöhe eines Kastensystems;
- horizontale Abstände der Durchblickpunkte zu vertikalen Mittellinien des Kastensystems;
- vertikale Abstände der Durchblickpunkte zu horizontalen Mittellinien des Kastensystems;
- Abständen des Hornhautscheitels des jeweiligen Auges zu einer dem Auge zugewandten Glasfläche,
- Winkel zwischen Scheibenebenen, die jeweils als Ebene des betreffenden Brillenglases festgelegt ist, und der Fassungsebene (FSW); und
- Winkel, um den die Fassungsebene nach vorne aus der Senkrechten geneigt ist (pantoskopischer Winkel).

Darüber hinaus können vom Ferndurchblickpunkt abweichende Durchblickpunkte entsprechend der jeweils anzuwendenden Zentriervorschrift berücksichtigt werden; dazu kann der räumliche Richtungsvektor der Blickrichtung um einen zur Zentriervorschrift passenden Winkel gedreht werden, um, ausgehend von einem Augendrehpunkt den Durchblickspunkt der neuen Blickrichtung durch die augenseitige Rückfläche des Brillenglases zu bestimmen. Eine optional bestimmte Nahblickrichtung kann weiterhin verwendet werden, um eine Korridorlänge eines Gleitsichtglases an die Tragesituation anzupassen. Andere Korrekturen, insbesondere in Bezug auf einen Habitus, eine Kopfdrehung oder eine Kopfseitenneigung des Nutzers oder auf eine Verschiebung einer Stempelfigur in Brillengläsern, die eine separate Fernzone und Nahzone aufweisen, können analog berücksichtigt werden. Für Definitionen und Hinweise zu Punkten, die von den Zentrierdaten umfasst sind, wird auf die Norm DIN EN ISO 13666:2013-10 verwiesen.

In einer bevorzugten Ausgestaltung kann eine Kopfseitenneigung des Nutzers aus einer der folgenden Größen abgeleitet werden:
- einem Winkel einer Fassungshorizontalen gegenüber einer Raumhorizontalen;
- aus einer Kopfseitenneigung eines virtuellen Modells eines Ausschnitts des Nutzers (Avatar);
- aus einer relativen Höhe der Augen des Avatars; und/oder
- aus einer Fassungshorizontalen einer dem Avatar virtuell aufgesetzte Brillenfassung.
Hierbei kann die Kopfseitenneigung als Korrekturparameter für eine Achslage des Brillenglases betrachtet werden und als weiterer Punkt in die Zentrierdaten einfließen. Daneben können weitere Korrekturparameter vor der Berechnung der Zentrierdaten verwendet werden, bevorzugt eine Vorneigungsänderung, eine Kopfdrehung, eine y-Verschiebung oder eine Blickrichtungsänderung.

In einem weiteren Aspekt betrifft die vorliegende Erfindung ein Verfahren zur Erzeugung eines Datensatzes, welcher in einem Verfahren zur Herstellung eines Brillenglases verwendet wird. Durch das Verfahren wird ein Datensatz erzeugt, welcher in dem Verfahren zur Herstellung des Brillenglases verwendet wird, wobei der Datensatz mindestens die folgenden Datenwerte umfasst:
- räumliche Koordinaten eines Referenzpunktes an jedem Auge des Nutzers;
- mindestens einen räumlichen Richtungsvektor zur Angabe mindestens einer Blickrichtung des Nutzers durch das Brillenglas; und
- eine räumliche Fassungsrandkurve,
wobei jeder der Datenwerte aus messtechnisch erfassten Werten oder aus vorhandenen Daten erzeugt wird.

Wie oben bereits erwähnt, kann hierbei der Referenzpunkt für jedes der beiden Augen besonders bevorzugt ausgewählt werden aus einer Gruppe umfassend eine Pupillenmitte, einen Pupillenreflex, einen Hornhautscheitel (Cornea apex) oder einem Augendrehpunkt. Hierbei kann der Datenwert für die Position jedes der beiden Referenzpunkte des Nutzers vorzugsweise mittels Bildverarbeitung bestimmt werden. Hierfür können besonders bevorzugt die Pupillenmitte, der Pupillenreflex und/oder der Hornhautscheitel aus mindestens jeweils zwei Aufnahmen des Nutzers, in welchen zumindest eine der beiden Pupillen oder der Hornhautscheitel erkennbar ist, ermittelt werden. Hierzu können, wie unten näher beschrieben, die zumindest eine frontale Aufnahme des Nutzers und die jeweils mindestens eine seitliche Aufnahme des Nutzers eingesetzt werden.

Wie weiterhin bereits oben erwähnt, können die Blickrichtungen des Nutzers durch das Brillenglas vorzugsweise messtechnisch bestimmt werden, insbesondere mittels der in WO 2005/069063 A1 dargestellten Verfahren und Vorrichtungen.

In einer bevorzugten Ausgestaltung können die Datenpunkte der Fassungsrandkurve messtechnisch erfasst werden, und zwar vorzugsweise aus einer einzelnen frontalen Aufnahme des Nutzers und vorzugsweise jeweils mindestens einer gleichzeitig hierzu erfolgenden seitlichen Aufnahme des Nutzers von beiden Seiten, sofern der Nutzer die Brillenfassung bei den genannten Aufnahmen trägt, mittels Bildverarbeitung bestimmt werden. Alternativ oder zusätzlich können die Datenpunkte der Fassungsrandkurve aus Konstruktionsdaten der Brillenfassung, insoweit diese als räumliches Modell verfügbar ist, ausgewählt werden. Hierbei können die Konstruktionsdaten der Brillenfassung zum Beispiel direkt aus Modelldaten des Herstellers für die Brillenfassung, beispielsweise aus CAD-Daten, bereitgestellt oder, insbesondere vor der Anpassung der Brillengläser an die von dem Nutzer ausgewählte Brillenfassung, in einem optischen Messlabor messtechnisch mittels einer optischen Aufnahmeeinheit erfasst werden, bevorzugt mittels eines Tracers abgetastet oder mittels eines Scanners aufgenommen werden.

In einem weiteren Aspekt betrifft die vorliegende Erfindung ein Computerprogramm zur Erzeugung eines Datensatzes, welcher in einem Verfahren zur Herstellung eines Brillenglases verwendet wird, wobei das Computerprogramm dazu eingerichtet ist, um den Datensatz zu erzeugen, wobei der Datensatz mindestens die folgenden Datenwerte umfasst:
- räumliche Koordinaten eines Referenzpunktes an jedem Auge des Nutzers;
- mindestens einen räumlichen Richtungsvektor zur Angabe mindestens einer Blickrichtung des Nutzers durch das Brillenglas; und
- eine räumliche Fassungsrandkurve,
wobei jeder der Datenwerte aus messtechnisch erfassten Werten oder aus vorhandenen Daten erzeugt wird.

In einem weiteren Aspekt betrifft die vorliegende Erfindung ein Verfahren zur Herstellung eines Brillenglases wobei die Herstellung des Brillenglases durch Bearbeitung eines Brillenglasrohlings erfolgt, wobei der Brillenglasrohling anhand von Zentrierdaten bearbeitet wird, wobei die Zentrierdaten aus einem Datensatz ermittelt werden, wobei der Datensatz mindestens die folgenden Datenwerte umfasst:
- räumliche Koordinaten eines Referenzpunktes an jedem Auge des Nutzers;
- mindestens einen räumlichen Richtungsvektor zur Angabe mindestens einer Blickrichtung des Nutzers durch das Brillenglas; und
- eine räumliche Fassungsrandkurve der Brillenfassung oder einer Glasrandfassung.

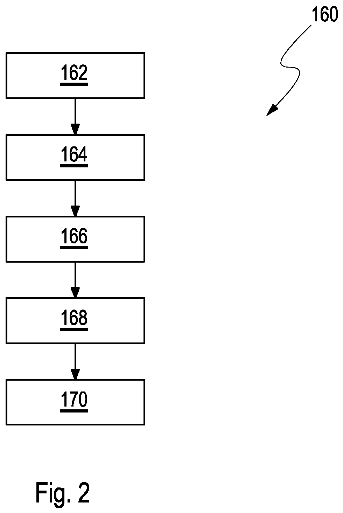

Hierbei kann die Bearbeitung eines Brillenglasrohlings vorzugsweise mittels einer Bearbeitungseinrichtung, insbesondere in einer mechanischen Bearbeitungseinrichtung, erfolgen, wobei die Zentrierdaten zur Ansteuerung der Bearbeitungseinrichtung verwendet werden. Zusätzlich zu den Datenwerten kann auch die Angabe eines Glastyps zur Ermittlung der Zentrierdaten eingesetzt werden, wobei sich der Glastyp auf das von dem Nutzer ausgewählte Brillenglas bezieht. Für weitere Einzelheiten wird auf die Darstellung des Ausführungsbeispiels in Bezug auf Figur 2 verweisen.

Für Definitionen und optionale Ausgestaltungen des Verfahrens und des Computerprogramms zur Erzeugung eines Datensatzes, welche in einem Verfahren zur Herstellung eines Brillenglases verwendet werden, sowie des Verfahrens zur Herstellung eines Brillenglases wird auf die oben oder unten stehende Beschreibung des Datensatzes zur Verwendung in einem Verfahren zur Herstellung eines Brillenglases verwiesen.

Der erfindungsgemäße Datensatz und die zugehörigen Verfahren und das Computerprogramm weisen gegenüber herkömmlichen Datensätzen und zugehörigen Verfahren und Computerprogrammen zahlreiche Vorteile auf. Insbesondere kann damit die Herstellung des einen Brillenglases bereits nach einmaliger Erfassung eines Datensatzes für eine Anpassung der Brillengläser an den Nutzer der Brille und an die von dem Nutzer ausgewählte Brillenfassung erfolgen. Dadurch kann nachträglich ein anderes Brillenglas als das ursprünglich vom Nutzer ausgewählte Brillenglas für die Brille verwendet werden, ohne dass für den Nutzer ein weiterer Datensatz für diese Anpassung ausgeführt werden muss. Auch lassen sich nachträglich, ohne dass dadurch die anderen Werte des Datensatzes verändert würden, beliebige Korrekturen durchführen, die darauf abzielen
- die Seitenneigung, Vorneigung oder den Drehwinkel des Kopfes zu verändern,
- die Höhe der Zentrierpunkte zu manipulieren
- die Blickrichtungen an bestimmte Sehaufgaben anzupassen.

Weiterhin können, wenn der Augenoptiker nur einige der tatsächlich verwendbaren Modelle für Brillenfassungen physisch vorrätig hält, dem Anwender nach Erzeugung des Avatars die gewünschte Brillenfassung nach während eines virtuellen Tragens vorführen. Die Zentrierdaten könnten hieraus dann sofort ermittelt werden, und die Brillenfassung zusammen mit Brillengläsern in einem einzigen Bestellvorgang geordert werden.

Zusammenfassend sind im Rahmen der vorliegenden Erfindung folgende Ausführungsformen besonders bevorzugt:
Ausführungsform 1. Auf einem Speichermedium gespeicherter Datensatz zur Verwendung in einem Verfahren zur Herstellung eines Brillenglases, wobei der Datensatz mindestens die folgenden Datenwerte umfasst:
   - räumliche Koordinaten eines Referenzpunktes an jedem Auge des Nutzers;
   - mindestens einen räumlichen Richtungsvektor zur Angabe mindestens einer Blickrichtung des Nutzers durch das Brillenglas; und
   - eine räumliche Fassungsrandkurve.
Ausführungsform 2. Datensatz nach der vorangehenden Ausführungsform, wobei sich die räumliche Fassungsrandkurve auf eine Brillenfassung oder eine Glasrandfassung bezieht.
Ausführungsform 3. Datensatz nach einer der vorangehenden Ausführungsformen, wobei alle Datenwerte in Bezug auf dasselbe räumliche Koordinatensystem angegeben werden.
Ausführungsform 4. Datensatz nach einer der vorangehenden Ausführungsformen, wobei die Erzeugung des Datensatzes ohne Iteration erfolgt.
Ausführungsform 5. Verfahren nach einer der vorangehenden Ausführungsformen, wobei der Referenzpunkt am Auge des Nutzers ausgewählt ist aus einer Pupillenmitte, einem Pupillenreflex, einem Hornhautscheitel oder einem Augendrehpunkt.
Ausführungsform 6. Verfahren nach einer der vorangehenden Ausführungsformen, wobei die mindestens eine Blickrichtung des Nutzers durch das Brillenglas ausgewählt ist aus: einer Nullblickrichtung; einer Hauptblickrichtung; einer tätigkeitsspezifischen Blickrichtung des Nutzers, insbesondere einer lesespezifischen Blickrichtung des Nutzers; einer durch Korrekturwerte modifizierten Blickrichtung des Nutzers.
Ausführungsform 7. Verfahren nach einer der vorangehenden Ausführungsformen, wobei die Fassungsrandkurve in Form einer Vielzahl von Datenpunkten vorliegt, wobei die Datenpunkte ausgewählt sind aus: messtechnisch erfassten Randwerten der Brillenfassung oder der Glasrandfassung, insbesondere durch Abtastung mittels eines Tracers oder aus einer Aufnahme mittels eines Scanners; Konstruktionsdaten der Brillenfassung oder der Glasrandfassung.
Ausführungsform 8. Datensatz nach einer der vorangehenden Ausführungsformen, wobei der Datensatz zusätzliche Informationen umfasst, wobei sich die zusätzlichen Informationen auf mindestens eine Korrektur der Datenwerte beziehen.
Ausführungsform 9. Datensatz nach der vorangehenden Ausführungsform, wobei die zusätzlichen Informationen als mindestens ein weiterer Datenwert in den Datensatz aufgenommen sind.
Ausführungsform 10. Datensatz nach einer der beiden vorangehenden Ausführungsformen, wobei die zusätzlichen Informationen in mindestens einem der Datenwerte des Datensatzes einbezogen sind.
Ausführungsform 11. Datensatz nach einer der vier vorangehenden Ausführungsformen, wobei die Korrektur der Datenwerte mindestens einen der folgenden Korrekturwerte umfasst:
   - eine räumliche Änderung einer Kopfhaltung des Nutzers;
   - eine Änderung einer vertikalen Koordinate mindestens eines Durchblickpunkts;
   - eine Änderung des räumlichen Richtungsvektors zur Angabe der mindestens einen Blickrichtung des Nutzers durch das Brillenglas relativ zu der durch den Nutzer bei einer Aufnahme der Blickrichtung eingenommen Blickrichtung.
Ausführungsform 12. Datensatz nach der vorangehenden Ausführungsform, wobei die räumliche Änderung der Kopfhaltung des Nutzers eine Änderung
   - einer habituellen Kopfhaltung, eine Korrektur einer Vorneigung des Kopfes des Nutzers;
   - einer Drehung des Kopfes des Nutzers; und/oder
   - einer Seitenneigung des Kopfes des Nutzer zum Zeitpunkt der Bildaufnahme umfasst.
Ausführungsform 13. Datensatz nach einer der beiden vorangehenden Ausführungsformen, wobei die Änderung der vertikalen Koordinate des mindestens einen Durchblickpunkts eine Verschiebung einer Stempelfigur parallel zu der vertikalen Richtung einer Fassungsebene der Brillenfassung umfasst.
Ausführungsform 14. Verfahren zur Erzeugung eines Datensatzes, welcher in einem Verfahren zur Herstellung eines Brillenglases verwendet wird, wobei der Datensatz mindestens die folgenden Datenwerte umfasst:
   - räumliche Koordinaten eines Referenzpunktes an jedem Auge des Nutzers;
   - mindestens einen räumlichen Richtungsvektor zur Angabe mindestens einer Blickrichtung des Nutzers durch das Brillenglas; und
   - eine räumliche Fassungsrandkurve,
   wobei die Datenwerte messtechnisch erfasst oder aus vorhandenen Daten bereitgestellt werden.
Ausführungsform 15. Verfahren nach der vorangehenden Ausführungsform, wobei sich die räumliche Fassungsrandkurve auf eine Brillenfassung oder eine Glasrandfassung bezieht.
Ausführungsform 16. Verfahren nach einer der beiden vorangehenden Ausführungsformen, wobei jeder der Datenwerte mittels einer optischen Messeinrichtung erfasst wird.
Ausführungsform 17. Verfahren nach der vorangehenden Ausführungsform, wobei die Datenwerte durch mechanische Verfahren erfasst und direkt verwendet oder mit optisch bestimmten Daten verrechnet und dann verwendet werden.
Ausführungsform 18. Verfahren nach der vorangehenden Ausführungsform, wobei in Bezug auf die Blickrichtung des Nutzers gleichzeitig zumindest eine frontale Aufnahme des Nutzers und jeweils mindestens eine seitliche Aufnahme des Nutzers vorgenommen werden, während ein Tragen der Brillenfassung durch den Nutzer erfolgt.
Ausführungsform 19. Verfahren nach der vorangehenden Ausführungsform, wobei aus der zumindest einen frontalen Aufnahme des Nutzers und der jeweils mindestens einen seitlichen Aufnahme des Nutzers ein virtuellen Modells eines Ausschnitts des Nutzers erstellt wird,
Ausführungsform 20. Verfahren nach der vorangehenden Ausführungsform, wobei der Ausschnitt des Nutzers zumindest jedes Auge des Nutzers und eine zu dem Tragen der Brillenfassung eingerichtete Partie des Nutzers umfasst, wobei das Tragen der Brillenfassung durch das virtuelle Modell erfolgt.
Ausführungsform 21. Verfahren nach einer der sieben vorangehenden Ausführungsformen, wobei der Referenzpunkt am Auge des Nutzers ausgewählt wird aus: einer Pupillenmitte, einem Pupillenreflex, einem Hornhautscheitel oder einem Augendrehpunkt. Ausführungsform 22. Verfahren nach der vorangehenden Ausführungsform, wobei die Pupillenmitte, der Pupillenreflex oder der Hornhautscheitel mittels einer Auswertung der zumindest einen frontalen Aufnahme des Nutzers und der jeweils mindestens einen seitlichen Aufnahme des Nutzers mittels Bildverarbeitung bestimmt wird.
Ausführungsform 23. Verfahren nach einer der neun vorangehenden Ausführungsformen, wobei die mindestens eine Blickrichtung des Nutzers durch das Brillenglas ausgewählt wird aus: einer Nullblickrichtung; einer Hauptblickrichtung; einer tätigkeitsspezifischen Blickrichtung des Nutzers, insbesondere einer lesespezifischen Blickrichtung des Nutzers; einer durch Korrekturwerte modifizierten Blickrichtung des Nutzers.
Ausführungsform 24. Verfahren nach einer der zehn vorangehenden Ausführungsformen, wobei die Fassungsrandkurve in Form einer Vielzahl von Datenpunkten bereitgestellt wird, wobei die Datenpunkte ausgewählt werden aus: messtechnisch erfassten Randwerten der Brillenfassung oder der Glasrandfassung, insbesondere durch Abtastung mittels eines Tracers oder aus einer Aufnahme mittels eines Scanners; Konstruktionsdaten der Brillenfassung oder der Glasrandfassung.
Ausführungsform 25. Computerprogramm zur Erzeugung eines Datensatzes, welcher in einem Verfahren zur Herstellung eines Brillenglases für die Brille verwendet wird, das Computerprogramm dazu eingerichtet ist, um den Datensatz zu erzeugen, wobei der Datensatz mindestens die folgenden Datenwerte umfasst:
   - räumliche Koordinaten eines Referenzpunktes an jedem Auge des Nutzers;
   - mindestens einen räumlichen Richtungsvektor zur Angabe mindestens einer Blickrichtung des Nutzers durch das Brillenglas; und
   - eine räumliche Fassungsrandkurve,
   wobei jeder der Datenwerte aus messtechnisch erfassten Werten oder aus vorhandenen Daten erzeugt wird.
Ausführungsform 26. Computerprogramm nach der vorangehenden Ausführungsform, wobei sich die räumliche Fassungsrandkurve auf eine Brillenfassung oder eine Glasrandfassung bezieht.
Ausführungsform 27. Computerprogramm nach einer der beiden vorangehenden Ausführungsformen, wobei der Referenzpunkt am Auge des Nutzers ausgewählt wird aus; einer Pupillenmitte, einem Pupillenreflex, einem Hornhautscheitel oder einem Augendrehpunkt.
Ausführungsform 28. Verfahren nach einer der drei vorangehenden Ausführungsformen, wobei die mindestens eine Blickrichtung des Nutzers durch das Brillenglas ausgewählt wird aus: einer Nullblickrichtung; einer Hauptblickrichtung; einer tätigkeitsspezifischen Blickrichtung des Nutzers, insbesondere einer lesespezifischen Blickrichtung des Nutzers; einer durch Korrekturwerte modifizierten Blickrichtung des Nutzers.
Ausführungsform 29. Verfahren nach einer der vier vorangehenden Ausführungsformen, wobei die Fassungsrandkurve in Form einer Vielzahl von Datenpunkten bereitgestellt wird, wobei die Datenpunkte ausgewählt werden aus: messtechnisch erfassten Randwerten der Brillenfassung oder der Glasrandfassung, insbesondere durch Abtastung mittels eines Tracers oder aus einer Aufnahme mittels eines Scanners; Konstruktionsdaten der Brillenfassung oder der Glasrandfassung.
Ausführungsform 30. Computerprogramm nach einer der fünf vorangehenden Ausführungsformen, wobei alle Datenwerte in Bezug auf dasselbe räumliche Koordinatensystem angegeben werden.
Ausführungsform 31. Computerprogramm nach einer der sechs vorangehenden Ausführungsformen, wobei die Erzeugung des Datensatzes ohne Iteration erfolgt.
Ausführungsform 32. Computerprogramm nach einer der sieben vorangehenden Ausführungsformen, wobei der Datensatz zusätzliche Informationen umfasst, wobei sich die zusätzlichen Informationen auf mindestens eine Korrektur der Datenwerte beziehen.
Ausführungsform 33. Computerprogramm nach der vorangehenden Ausführungsform, wobei die zusätzlichen Informationen als mindestens ein weiterer Datenwert in den Datensatz aufgenommen werden.
Ausführungsform 34. Computerprogramm nach einer der beiden vorangehenden Ausführungsformen, wobei die zusätzlichen Informationen in mindestens einem der Datenwerte des Datensatzes einbezogen werden.
Ausführungsform 35. Computerprogramm nach einer der zehn vorangehenden Ausführungsformen, wobei die Korrektur der Datenwerte mindestens einen der folgenden Korrekturwerte umfasst:
   - eine räumliche Änderung einer Kopfhaltung des Nutzers;
   - eine Änderung einer vertikalen Koordinate mindestens eines Durchblickpunkts;
   - eine Änderung des räumlichen Richtungsvektors zur Angabe der mindestens einen Blickrichtung des Nutzers durch das Brillenglas relativ zu der durch den Nutzer bei einer Aufnahme der Blickrichtung eingenommen Blickrichtung.
Ausführungsform 36. Verfahren zur Herstellung eines Brillenglases, wobei die Herstellung des Brillenglases durch Bearbeitung eines Brillenglasrohlings erfolgt, wobei der Brillenglasrohling anhand von Zentrierdaten bearbeitet wird, wobei die Zentrierdaten aus einem Datensatz ermittelt werden, wobei der Datensatz mindestens die folgenden Datenwerte umfasst:
   - räumliche Koordinaten eines Referenzpunktes an jedem Auge des Nutzers;
   - mindestens einen räumlichen Richtungsvektor zur Angabe mindestens einer Blickrichtung des Nutzers durch das Brillenglas; und
   - eine räumliche Fassungsrandkurve.
Ausführungsform 37. Verfahren nach der vorangehenden Ausführungsform, wobei sich die räumliche Fassungsrandkurve auf eine Brillenfassung oder eine Glasrandfassung bezieht.
Ausführungsform 38. Verfahren nach einer der beiden vorangehenden Ausführungsformen, wobei zur Ermittlung der Zentrierdaten weiterhin ein Glastyp einbezogen wird, wobei sich der Glastyp auf das von dem Nutzer ausgewählte Brillenglas bezieht.
Ausführungsform 39. Verfahren nach einer der drei vorangehenden Ausführungs-formen, wobei der Datensatz zusätzliche Informationen umfasst, wobei sich die zusätzlichen Informationen auf mindestens eine Korrektur der Datenwerte beziehen.
Ausführungsform 40. Verfahren nach der vorangehenden Ausführungsform, wobei die zusätzlichen Informationen als mindestens ein weiterer Datenwert in den Datensatz aufgenommen werden.
Ausführungsform 41. Verfahren nach einer der beiden vorangehenden Ausführungsformen, wobei die zusätzlichen Informationen in mindestens einem der Datenwerte des Datensatzes einbezogen werden.
Ausführungsform 42. Verfahren nach einer der drei vorangehenden Ausführungsformen, wobei die Korrektur der Datenwerte mindestens einen der folgenden Korrekturwerte umfasst:
   - eine räumliche Änderung einer Kopfhaltung des Nutzers;
   - eine Änderung einer vertikalen Koordinate mindestens eines Durchblickpunkts;
   - eine Änderung des räumlichen Richtungsvektors zur Angabe der mindestens einen Blickrichtung des Nutzers durch das Brillenglas relativ zu der durch den Nutzer bei einer Aufnahme der Blickrichtung eingenommen Blickrichtung.
Ausführungsform 43. Verfahren nach der vorangehenden Ausführungsform, wobei die räumliche Änderung der Kopfhaltung des Nutzers eine Änderung
   - einer habituellen Kopfhaltung, eine Korrektur einer Vorneigung des Kopfes des Nutzers;
   - einer Drehung des Kopfes des Nutzers; und/oder
   - einer Seitenneigung des Kopfes des Nutzer zum Zeitpunkt der Bildaufnahme umfasst.
Ausführungsform 44. Verfahren nach einer der beiden vorangehenden Ausführungsformen, wobei die Änderung der vertikalen Koordinate des mindestens einen Durchblickpunkts eine Verschiebung einer Stempelfigur parallel zu der vertikalen Richtung einer Fassungsebene der Brillenfassung umfasst.
Ausführungsform 45. Verfahren nach einer der neun vorangehenden Ausführungsformen, wobei alle Datenwerte in Bezug auf dasselbe räumliche Koordinatensystem angegeben werden.
Ausführungsform 46. Verfahren nach einer der zehn vorangehenden Ausführungsformen, wobei der Referenzpunkt am Auge des Nutzers ausgewählt ist aus einer Pupillenmitte, einem Pupillenreflex, einem Hornhautscheitel oder einem Augendrehpunkt.
Ausführungsform 47. Verfahren nach einer der elf vorangehenden Ausführungsform, wobei alle Datenwerte in Bezug auf dasselbe räumliche Koordinatensystem angegeben werden.
Ausführungsform 48. Verfahren nach einer der zwölf vorangehenden Ausführungsformen, wobei die Erzeugung des Datensatzes ohne Iteration erfolgt.
Ausführungsform 49. Verfahren nach einer der dreizehn vorangehenden Ausführungsformen, wobei die Datenwerte des Datensatzes dazu verwendet werden, um hieraus mindestens einen Durchblickpunkt zu ermitteln.
Ausführungsform 50. Verfahren nach der vorangehenden Ausführungsform, wobei der Durchblickpunkt aus einem Schnittpunkt der Blickrichtung des Nutzers durch das Brillenglas mit einer Scheibenebene ermittelt wird.
Ausführungsform 51. Verfahren nach einer der drei vorangehenden Ausführungsformen, wobei die Zentrierdaten ausgewählt sind aus mindestens einem der folgenden Zentrierwerte:
   - Abstand des Hornhautscheitels des jeweiligen Auges zu dem Durchblickpunkt einer Blickrichtung durch das Brillenglas;
   - Abstände der Durchblickpunkte zu Geraden durch innerste Punkte der Fassungsrandkurven;
   - Abstände der Durchblickpunkte zu Geraden durch unterste Punkte der Fassungsrandkurven;
   - Scheibenlänge und Scheibenhöhe eines Kastensystems;
   - horizontale Abstände der Durchblickpunkte zu vertikalen Mittellinien des Kastensystems;
   - vertikale Abstände der Durchblickpunkte zu horizontalen Mittellinien des Kastensystems;
   - Abständen des Hornhautscheitels des jeweiligen Auges zu einer Scheibenebene;
   - Winkel zwischen den Scheibenebenen und der Fassungsebene; und
   - Winkel, um den die Fassungsebene nach vorne aus einer Senkrechten geneigt ist.
Ausführungsform 52. Verfahren nach der vorangehenden Ausführungsform, wobei
   - die räumliche Koordinaten der Position des Referenzpunktes an jedem Auge des Nutzers;
   - der mindestens eine räumliche Richtungsvektor zur Angabe der mindestens einen Blickrichtung des Nutzers durch das Brillenglas; und
   - die räumliche Fassungsrandkurve
   ermittelt werden, bevor die Zentrierdaten bestimmt werden.
Ausführungsform 53. Verfahren nach der vorangehenden Ausführungsform, wobei eine Kopfseitenneigung als Korrekturparameter für eine Achslage des Brillenglases angeben wird, wobei der Korrekturparameter zur Korrektur der Zentrierdaten verwendet oder zusätzlich zu den Zentrierdaten übermittelt wird, wobei die Kopfseitenneigung des Nutzers der Brille abgeleitet wird aus mindestens:
   - einem Winkel einer Fassungshorizontalen gegenüber einer Raumhorizontalen;
   - einer Kopfseitenneigung eines virtuellen Modells eines Ausschnitts des Nutzers;
   - aus einer relativen Höhe der Augen des virtuellen Modells des Ausschnitts Nutzers; und/oder
   - einer Fassungshorizontalen einer dem virtuellen Modell des Ausschnitts des Nutzers virtuell aufgesetzte Brillenfassung.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figuren 1A bis 1D: zeigen jeweils schematische Darstellungen einer räumlichen Anordnung von Augen eines Nutzers, von Blickrichtungen des Nutzers und einer Fassungsrandkurve; und
- Figur 2: ein Ablaufdiagramm eines bevorzugten Ausführungsbeispiels eines erfindungsgemäßen Verfahrens zur Herstellung eines Brillenglases.

### Ausführungsbeispiele

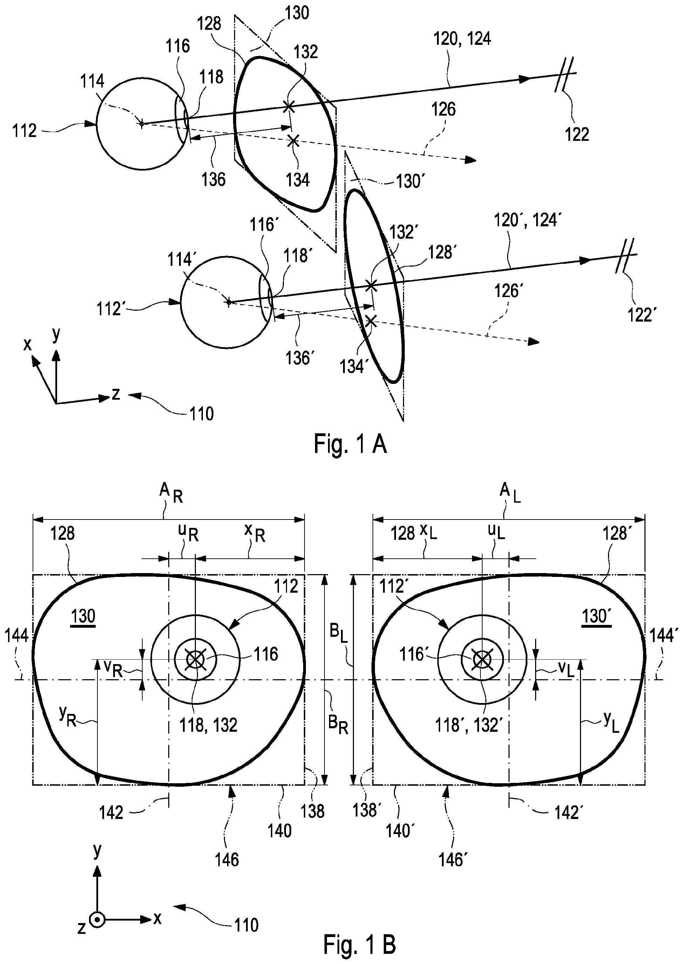

Figur 1A zeigt eine schematische Darstellung einer räumlichen Anordnung von erfindungsgemäßen Elementen innerhalb eines räumlichen Koordinatensystems 110 in Draufsicht. Das hier dargestellte räumliche Koordinatensystem 110 ist ein kartesisches Koordinatensystem, welches die Koordinaten x, y und z aufweist, die senkrecht zueinander stehen. Alternativ kann ein anderes räumliches Koordinatensystem, insbesondere ein zylindrisches Koordinatensystem, verwendet werden. Ein räumliches Koordinatensystem zeichnet sich dadurch aus, dass zu einer vollständigen Beschreibung sich darin befindlicher Elemente drei voneinander unabhängige Werte erforderlich sind, die in der Darstellung in Figur 1A durch Angabe von Werte für die Koordinaten x, y und z gegeben werden.

Jedes Auge 112, 112' eines Nutzers (nicht dargestellt) weist, wie in Figur 1A dargestellt, einen Augendrehpunkt 114, 114' als Drehzentrum auf. Hierzu wird angenommen, dass sich das Auge 112. 112' in einer Augenhöhle wie in einem Kugelgelenk um den Augendrehpunkt 114, 114' bewegen kann. Jedes Auge 112, 112' verfügt weiterhin über eine Pupille 116, 116', wobei ein Datenwert für die räumlichen Koordinaten eines Referenzpunktes an jedem Auge 112, 112' des Nutzers bevorzugt aus einer jeweiligen Pupillenmitte 118, 118' bestimmt werden kann. Alternativ kann hierfür ein mittels Bildverarbeitung aus mindestens einer Aufnahme jeden Auges 112, 112' des Nutzers ermittelter Pupillenreflex (nicht dargestellt) verwendet werden. Weitere Referenzpunkte an jedem Auge 112, 112' des Nutzers, insbesondere der Augendrehpunkt 114, 114' oder ein Hornhautscheitel, sowie Möglichkeiten zu ihrer Bestimmung sind denkbar.

Wie Figur 1A weiterhin zeigt, geht je eine Blickrichtung 120, 120' des Nutzers durch das Brillenglas jeweils von dem jeweiligen Augendrehpunkt 114, 114' aus und durchquert die jeweils zugehörige Pupille 116, 116', insbesondere die betreffende Pupillenmitte 118, 118'. In der Darstellung gemäß Figur 1A sind die beiden Blickrichtungen 120, 120' des Nutzers auf Unendlich 122, 122' gerichtet und parallel zueinander. Eine derartige Blickrichtung 120, 120' wird in der Augenoptik üblicherweise als "Nullblickrichtung" bezeichnet. Hierbei kann die Blickrichtung 120, 120' eine Hauptblickrichtung 124, 124' des Nutzers sein. Der Nutzer kann jedoch auch über eine oder mehrere weitere Blickrichtungen durch das Brillenglas, zum Beispiel eine Nahblickrichtung oder eine tätigkeitsspezifische Blickrichtung 126, 126', verfügen, die ebenfalls schematisch in Figur 1A eingezeichnet ist. Die Blickrichtungen 120, 120' des Nutzers durch das Brillenglas und, falls zutreffend, die eine oder mehreren weiteren Blickrichtungen, zum Beispiel den tätigkeitsspezifischen Blickrichtungen 126, 126', werden hierbei jeweils, wie oben näher beschrieben, als räumlicher Richtungsvektor angegeben. Die Blickrichtungen 120, 120' des Nutzers durch das Brillenglas und, falls zutreffend, die eine oder mehreren weiteren Blickrichtungen, zum Beispiel den tätigkeitsspezifischen Blickrichtungen 126, 126', können messtechnisch bestimmt werden, vorzugsweise mittels der in WO 2005/069063 A1 dargestellten Verfahren und Vorrichtungen.

Weiterhin zeigt Figur 1A jeweils eine Fassungsrandkurve 128, 128' einer von einem Nutzer einer Brille ausgewählte Brillenfassung (nicht dargestellt), welche zur Aufnahme von zwei Brillengläsern (nicht dargestellt) eingerichtet ist. Jede der Fassungsrandkurven 128, 128' umfasst hierbei vorzugsweise eine Vielzahl von Datenpunkten. Hierbei kann jeder Datenpunkt jeder der Fassungsrandkurven 128, 128' einen messtechnisch erfassten Randwert, insbesondere einer Innenkontur, der Brillenfassung umfassen, wobei die Randwerte der Brillenfassung aus mindestens einer Aufnahme des Nutzers, in welcher die Brillenfassung dargestellt ist, ermittelt werden. Alternativ oder zusätzlich können die Datenpunkte der Fassungsrandkurven 128, 128' in einem optischen Messlabor, insbesondere vor der Anpassung der Brillengläser an die von dem Nutzer ausgewählte Brillenfassung, messtechnisch erfasst werden, vorzugsweise mittels einer optischen Aufnahmeeinheit. Hierzu können bevorzugt eine Abtastung mittels eines Tracers oder eine Aufnahme mittels eines Scanners eingesetzt werden. Weiterhin alternativ oder zusätzlich können die Datenpunkte der Fassungsrandkurven 128, 128' aus Konstruktionsdaten eines räumlichen Modells der Brillenfassung ausgewählt werden, bevorzugt direkt aus Modelldaten des Herstellers, beispielsweise aus CAD-Daten.

Während in Figur 1A schematisch die Fassungsrandkurven 128, 128' einer Vollrandbrille, welche einen die beiden Brillengläser jeweils umschließenden Brillenfassungsrahmen aufweist, dargestellt sind, können die Fassungsrandkurven 128, 128' in vergleichbarer Weise auch von Halbrandbrillen, in welchen die beiden Brillengläser nur teilweise an eine Halterung angrenzen, sowie von rahmenlosen Brillen, in welchen die Brillengläser jeweils über eine Bohrung zur Aufnahme einer Halterung verfügen, erzeugt werden. Insbesondere im Fall von Halbrandbrillen oder rahmenlosen Brillen können die Datenpunkte der Fassungsrandkurven 128, 128' daher bevorzugt Randwerte der Glasrandfassung umfassen. Insbesondere kann sich hierbei jeder Datenpunkt der Fassungsrandkurven 128, 128' auf einen ausgewählten Abschnitt der Brillenfassung oder der Glasrandfassung beziehen, beispielsweise auf einen festgelegten Winkelbereich, bevorzugt 0,25° bis 10°, besonders bevorzugt 0,5° bis 2,5°, insbesondere 1° bis 2°, der Innenkontur der Brillenfassung. Damit kann jeder der der Fassungsrandkurven 128, 128' 30 bis 1500, bevorzugt 36 bis 1440, mehr bevorzugt 144 bis 720, insbesondere 180 bis 360, Datenpunkte aufweisen. Andere Arten der Festlegung der Datenpunkte der Fassungsrandkurven 128, 128' sind jedoch möglich, beispielsweise eine zufällige oder stochastische Festlegung oder eine Festlegung, in welcher sich mehr Datenpunkte auf ausgezeichnete Punkte der Fassungsrandkurve 128, 128' beziehen, etwa auf Bereiche des Brillenfassungsrahmen, die eine im Vergleich zum gesamten Brillenfassungsrahmen erhöhte Krümmung aufweisen.

Weiterhin zeigt Figur 1A die aus den Fassungsrandkurven 128, 128' jeweils ermittelten Scheibenebenen 130, 130', welche zur Berechnung der Zentrierdaten für die Herstellung von Brillengläsern für die von dem Nutzer der Brille ausgewählte Brillenfassung verwendet werden. Die Scheibenebenen 130, 130' werden jeweils als an die Fassungsrandkurven 128, 128' angenäherte ebene Flächen gebildet, wobei die Fassungsrandkurven 128, 128' aufgrund ihres räumlichen Verlaufs im Allgemeinen jedoch aus den Scheibenebenen 130, 130' heraustreten.

Aus einem jeweiligen Schnittpunkt der Blickrichtungen 120, 120' des Nutzers mit der zugehörigen Scheibenebene 130, 130' kann hieraus der Durchblickpunkt 132, 132' der betreffenden Blickrichtung 120, 120' mit der jeweiligen Scheibenebene 130, 130' ermittelt werden. In analoger Weise kann dies, wie ebenfalls schematisch in Figur 1A eingezeichnet, auch für eine oder mehrere der weiteren Blickrichtungen, zum Beispiel für die tätigkeitsspezifische Blickrichtung 126, 126' erfolgen, wodurch sich ein oder mehrere weitere Durchblickpunkte 134, 134' bestimmen lassen.

Weiterhin kann hierdurch ein jeweiliger Abstand 136, 136' des Hornhautscheitels (Cornea Apex) des jeweiligen Auges 112, 112' zu dem Durchblickpunkt 132, 132' der zugehörigen Blickrichtung 120, 120', der auch als "Hornhautscheitelabstand" oder "HSA" bezeichnet wird, bestimmt werden, wobei der Hornhautscheitelabstand einen von den Zentrierdaten umfassten Zentrierwert darstellt.

Figur 1B zeigt eine schematische Darstellung derselben räumlichen Anordnung der erfindungsgemäßen Elemente innerhalb des räumlichen Koordinatensystems 110 gemäß Figur 1A in einer Ansicht entgegen den beiden, auf Unendlich 122, 122' gerichteten Blickrichtungen 120, 120' des Nutzers, die jeweils von dem jeweiligen Augendrehpunkt 114, 114' (hier nicht dargestellt) ausgehen und die jeweils zugehörige Pupille 116, 116', insbesondere die betreffende Pupillenmitte 118, 118', durchqueren. Hieraus kann, wie in Figur 1 A dargestellt, in jeder der Scheibenebenen 130, 130' jeweils der Durchblickpunkt 132, 132' und, falls zutreffend, der mindestens eine weitere Durchblickpunkt 134, 134' (hier nicht dargestellt) ermittelt werden. Aus der jeweiligen Lage des Durchblickpunkts 132, 132' kann, wie Figur 1B zeigt, eine Berechnung weiterer von den Zentrierdaten umfasster Zentrierwerte vorgenommen werden, insbesondere
- von Abständen x_{L}, x_{R} der Durchblickpunkte 132, 132' zu Geraden 138, 138' durch innerste Punkte der Fassungsrandkurven 128, 128';
- von Abständen y_{L}, y_{R} der Durchblickpunkte zu 132, 132' zu Geraden 140, 140' durch unterste Punkte der Fassungsrandkurven 128, 128';
- von horizontalen Abständen u_{L}, u_{R} der Durchblickpunkte 132, 132' zu vertikalen Mittellinien 142, 142'eines Kastensystems 146, 146'; und
- von vertikalen Abständen v_{L}, v_{R} der Durchblickpunkte 132, 132' zu horizontalen Mittellinien 144, 144' des Kastensystems 146, 146'.

Darüber hinaus können die Zentrierdaten vorzugsweise die folgenden weiteren Zentrierwerte umfassen:
- horizontale Abstände A_{L}, A_{R} von inneren und äußeren vertikalen Begrenzungen von die Fassungsrandkurven 128, 128' umschreibenden und in der Scheibenebene 130, 130' liegenden Rechtecken des Kastensystems 146, 146'; und
- vertikale Abstände B_{L}, B_{R} von oberen und unteren horizontalen Begrenzungen der die Fassungsrandkurven 128, 128' umschreibenden und in der Scheibenebene 130, 130' liegenden Rechtecke des Kastensystems 146, 146',
so dass im Unterschied zur Norm DIN EN ISO 13666:2013-10 die horizontalen Abstände A_{L}, A_{R} und die vertikalen Abstände B_{L}, B_{R} sich für jeder der Scheibenebenen 130, 130' voneinander unterscheiden können.

Im Zusammenhang mit den Zentrierdaten wird darauf hingewiesen, dass die Indizes L und R die Richtungen links und rechts bezeichnen, wobei die Richtungen aus der Sicht des Nutzers der Brille zu betrachten sind.

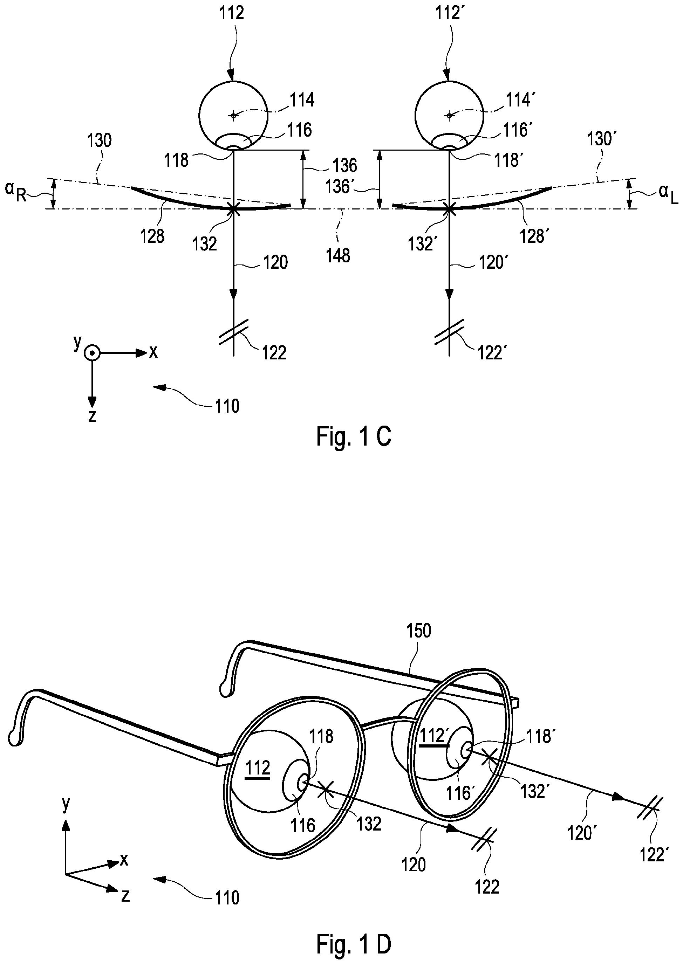

Wie aus Figur 1C hervorgeht, die eine weitere schematische Darstellung derselben räumlichen Anordnung der erfindungsgemäßen Elemente innerhalb des räumlichen Koordinatensystems 110 gemäß den Figuren 1A und 1B in einer Aufsicht zeigt, kann aus der jeweiligen Lage des Durchblickpunkts 132, 132' eine Berechnung weiterer, ebenfalls von den Zentrierdaten umfasster Zentrierwerte vorgenommen werden, insbesondere
- von Abständen 136, 136' des Hornhautscheitels des jeweiligen Auges 112, 112' zu einer Fassungsebene 148, die als Mittelebene der Brillenfassung festgelegt ist;
- eines Winkels α_{L}, α_{R} zwischen den Scheibenebenen 130, 130'und der Fassungsebene 148; und
- eines Winkel (nicht dargestellt), der auch als "pantoskopischer Winkel" bezeichnet wird, um den die Fassungsebene 148 nach vorne aus der Senkrechten, d.h. gegenüber der Koordinate y des räumlichen Koordinatensystems 110, geneigt ist.

Somit können alle von den Zentrierdaten umfassten Zentrierwerte, die für die Herstellung der Brillengläser für die von dem Nutzer der Brille ausgewählte Brillenfassung 150 verwendet werden, ausschließlich bereits aus der Kenntnis der Datenwerte der
- räumliche Koordinaten einer Position des jeweiligen Referenzpunktes an jedem der beiden Augen 112, 112' des Nutzers;
- mindestens einen räumlichen Richtungsvektor zur Angabe mindestens einer Blickrichtung 120, 120' des Nutzers durch das Brillenglas; und
- eine räumliche Fassungsrandkurve 128, 128' der Brillenfassung oder einer Glasrandfassung
bestimmt werden.

Hierbei ist besonders vorteilhaft, dass bei anschließender Auswahl des Glastyps und damit der Auswahl der zugehörigen Zentriervorschrift sich die Zentrierdaten jeweils aus den angegebenen Datenwerten bestimmen lassen, ohne dass erneut Messungen an dem Nutzer und/oder der Brillenfassung vorgenommen werden müssen. Zudem werden hierbei die Fassungsrandkurven 128, 128' selbst verwendet und nicht eine Projektion der Fassungsrandkurven 128, 128' auf die Scheibenebenen 130, 130'.

Figur 1D zeigt schließlich eine weitere schematische Darstellung der räumlichen Anordnung der Augen 112, 112' des Nutzers, der Blickrichtung 120, 120' des Nutzers durch das Brillenglas und der Fassungsrandkurven 128, 128' der Brillenfassung 150.

Das erfindungsmäße Bestimmen der Zentrierdaten erfordert insbesondere keine Annahme von symmetrischen Parametern in Bezug auf die beiden Seiten rechts und links des Nutzers und damit der ausgewählte Brillenfassung 150 und der hierfür herzustellenden Brillengläser. Ein Beispiel hierfür ist, dass die Hornhautscheitelabstande 136, 136' für jede der Augen 112, 112' des Nutzer voneinander abweichen können. Ein weiteres bevorzugtes Beispiel können unterschiedliche Werte für die Seiten A und B des Kastensystems 146, 146', die in Ergänzung der Norm DIN EN ISO 13666:2013-10 nunmehr für rechts und links, d.h. für A_{L} und A_{R} und/oder für B_{L} und B_{R}, jeweils unterschiedliche Werte annehmen können. Ein weiteres Beispiel hierfür ist die oben erwähnte Veränderung der Achslage des Brillenglases aufgrund einer Kopfseitenneigung des Nutzers.

Figur 2 zeigt schematisch ein Ablaufdiagramm eines bevorzugten Ausführungsbeispiels eines erfindungsgemäßen Verfahrens 160 zur Herstellung eines Brillenglases.

In einem ersten Verfahrensschritt kann hierbei eine Bestimmung der Korrektion 162 des Nutzers der Brille erfolgen. In diesem Verfahrensschritt kann insbesondere eine Bestimmung einer erforderlichen Korrektion von Fehlsichtigkeiten des Nutzers der Brille vorgenommen werden, wobei auf bereits bekannte messtechnisch erfasste Werte, zum Beispiel aus einem Brillenpass des Nutzers, zurückgegriffen und/oder wobei eine objektive Refraktion jeder Pupille des Nutzers durch Durchführung einer Refraktionsbestimmung mittels eines bekannten Refraktometers ermittelt werden kann.

In einem weiteren Verfahrensschritt kann eine Auswahl 164 der Brillenfassung 150 insbesondere durch den Nutzer vorgenommen werden.

In einem weiteren Verfahrensschritt kann eine Erzeugung 166 des erfindungsgemäßen Datensatzes erfolgen, wobei der Datensatz, wie oben angegeben, mindestens die folgenden Datenwerte umfasst:
- räumliche Koordinaten einer Position eines Referenzpunktes an jedem Auge 112, 112' des Nutzers;
- mindestens einen räumlichen Richtungsvektor zur Angabe mindestens einer Blickrichtung 120, 120' des Nutzers durch das Brillenglas; und
- eine räumliche Fassungsrandkurve 128, 128', insbesondere der Brillenfassung 150 oder einer Glasrandfassung,
wobei jeder der Datenwerte aus messtechnisch erfassten Werten oder aus vorhandenen Daten erzeugt wird.

Diese Daten können mittels einer Zentrieraufnahme mit von dem Nutzer aufgesetzter Brille unter habitueller Kopfhaltung und definierter Blickrichtung 120, 120' des Nutzers durch das Brillenglas vorgenommen werden. Alternativ kann hierzu ein virtuelles Modell eines Ausschnitts des Nutzers, insbesondere vom Kopf des Nutzers, das auch als "Avatar" bezeichnet wird, verwendet werden, wobei dem Avatar mindestens eine Brillenfassung 150, die als räumliches Modell verfügbar ist, aufgesetzt werden kann.

In einem weiteren Verfahrensschritt kann eine Auswahl 168 des Glastyps durch den Nutzer vorgenommen werden, wobei die Glasauswahl, wie oben beschrieben, den Glastyp, einen Brechungsindex, eine Tönung und mindestens eine Beschichtung der Brillengläser umfassen kann.

In einem weiteren Verfahrensschritt kann eine Bestimmung 170 der Zentrierdaten erfolgen. Nach der Erzeugung 166 des oben beschriebenen Datensatzes und der Auswahl 168 des Glastyps durch den Nutzer, insbesondere der Festlegung des Glastyps für die Brillengläser, kann somit die Zentriervorschrift zur Anpassung der Brillengläser an die Brillenfassung 150 ermittelt und anschließend zur Herstellung der Brillengläser eingesetzt werden.

Sollte nachträglich eine Änderung der Auswahl 168 des Glastyps durch den Nutzer oder den Augenoptiker erfolgen, so kann der während des Verfahrensschritts 166 erzeugte Datensatz, welcher zumindest die oben angegebenen Datenwerte umfasst, unverändert für die Bestimmung 170 der Zentrierdaten vorgenommen werden. Damit kann die Bestimmung 170 der Zentrierdaten und die Ermittlung der Zentriervorschrift in vorteilhafte Weise ohne Iteration durch Vornahme eines einfachen sukzessiven Ablaufs erfolgen.

### Bezugszeichenliste

- 110: räumliches Koordinatensystem
- 112, 112': Auge
- 114, 114': Augendrehpunkt
- 116, 116': Pupille
- 118, 118': Pupillenmitte
- 120, 120': Blickrichtung des Nutzers durch das Brillenglas
- 122, 122': Unendlich
- 124, 124': Hauptblickrichtung
- 126, 126': tätigkeitsspezifische Blickrichtung
- 128, 128': Fassungsrandkurve
- 130, 130': Scheibenebene
- 132, 132': Durchblickpunkt
- 134, 134': weiterer Durchblickpunkt
- 136, 136': Hornhautscheitelabstand
- 138, 138': Gerade durch innerste Punkte der Fassungsrandkurve
- 140, 140': Gerade durch unterste Punkte der Fassungsrandkurve
- 142, 142': vertikale Mittellinie
- 144, 144': horizontale Mittellinie
- 146, 146': Kastensystem
- 148: Fassungsebene
- 150: Brillenfassung
- 160: Verfahren zur Herstellung eines Brillenglases
- 162: Bestimmung der Korrektion
- 164: Auswahl der Brillenfassung
- 166: Erzeugung des erfindungsgemäßen Datensatzes
- 168: Auswahl der Glasausstattung
- 170: Bestimmung der Zentrierdaten

## Patentansprüche

1. Auf einem Speichermedium gespeicherter Datensatz zur Verwendung in einem Verfahren zur Herstellung eines Brillenglases,
**dadurch gekennzeichnet,**
**dass** der Datensatz mindestens die folgenden Datenwerte umfasst:
- räumliche Koordinaten eines Referenzpunktes an jedem Auge (112, 112') des Nutzers;
- mindestens einen räumlichen Richtungsvektor zur Angabe mindestens einer Blickrichtung (120, 120') des Nutzers durch das Brillenglas; und
- eine räumliche Fassungsrandkurve (128, 128').

2. Datensatz nach einem der vorangehenden Ansprüche, **dadurch gekennzeichnet, dass** alle Datenwerte in Bezug auf dasselbe räumliche Koordinatensystem (110) angegeben sind.

3. Datensatz nach einem der vorangehenden Ansprüche, **dadurch gekennzeichnet, dass** der Referenzpunkt am Auge (112, 112') des Nutzers ausgewählt ist aus: einer Pupillenmitte (118, 118'), einem Pupillenreflex, einem Hornhautscheitel oder einem Augendrehpunkt (114, 114').

4. Datensatz nach einem der vorangehenden Ansprüche, **dadurch gekennzeichnet, dass** die mindestens eine Blickrichtung (120, 120') des Nutzers durch das Brillenglas ausgewählt ist aus: einer Nullblickrichtung, einer Hauptblickrichtung, einer tätigkeitsspezifischen Blickrichtung (126, 126') des Nutzers, einer durch Korrekturwerte modifizierten Blickrichtung des Nutzers.

5. Datensatz nach einem der vier vorangehenden Ansprüche, **dadurch gekennzeichnet, dass** die Fassungsrandkurve (128, 128') in Form einer Vielzahl von Datenpunkten vorliegt, wobei die Datenpunkte ausgewählt sind aus: messtechnisch erfassten Randwerten einer Brillenfassung (150) oder einer Glasrandfassung, Konstruktionsdaten der Brillenfassung (150) oder der Glasrandfassung.

6. Datensatz nach dem vorangehenden Anspruch, **dadurch gekennzeichnet, dass** der Datensatz zusätzliche Informationen umfasst, wobei sich die zusätzlichen Informationen auf mindestens eine Korrektur der Datenwerte beziehen, wobei die zusätzlichen Informationen als mindestens ein weiterer Datenwert in den Datensatz aufgenommen sind oder wobei die zusätzlichen Informationen in mindestens einem der Datenwerte des Datensatzes einbezogen sind.

7. Datensatz nach dem vorangehenden Anspruch, **dadurch gekennzeichnet, dass** die Korrektur der Datenwerte mindestens einen der folgenden Korrekturwerte umfasst:
- eine räumliche Änderung einer Kopfhaltung des Nutzers;
- eine Änderung einer vertikalen Koordinate mindestens eines Durchblickpunkts (132, 132');
- eine Änderung des räumlichen Richtungsvektors zur Angabe der mindestens einen Blickrichtung (120, 120') des Nutzers durch das Brillenglas relativ zu der durch den Nutzer bei einer Aufnahme der Blickrichtung (120, 120') eingenommen Blickrichtung (120, 120').

8. Verfahren zur Erzeugung eines Datensatzes, welcher in einem Verfahren zur Herstellung eines Brillenglases verwendet wird,
**dadurch gekennzeichnet,**
**dass** der Datensatz mindestens die folgenden Datenwerte umfasst:
- räumliche Koordinaten eines Referenzpunktes an jedem Auge (112, 112') des Nutzers;
- mindestens einen räumlichen Richtungsvektor zur Angabe mindestens einer Blickrichtung (120, 120') des Nutzers durch das Brillenglas; und
- eine räumliche Fassungsrandkurve (128, 128'),
wobei jeder der Datenwerte aus messtechnisch erfassten Werten oder aus vorhandenen Daten erzeugt wird.

9. Verfahren nach dem vorangehenden Anspruch, **dadurch gekennzeichnet**, das jeder der Datenwerte mittels einer optischen Messeinrichtung erfasst wird, wobei in Bezug auf die Blickrichtung des Nutzers gleichzeitig zumindest eine frontale Aufnahme des Nutzers und mindestens eine seitliche Aufnahme des Nutzers vorgenommen werden, während ein Tragen der Brillenfassung (150) durch den Nutzer erfolgt.

10. Verfahren nach dem vorangehenden Anspruch, **dadurch gekennzeichnet, dass** aus der zumindest einen frontalen Aufnahme des Nutzers und der mindestens einen seitlichen Aufnahme des Nutzers ein virtuelles Modell eines Ausschnitts des Nutzers erstellt wird, wobei der Ausschnitt des Nutzers zumindest jedes Auge (112, 112') des Nutzers und eine zu dem Tragen der Brillenfassung (150) eingerichtete Partie des Nutzers umfasst, wobei das Tragen der Brillenfassung (150) durch das virtuelle Modell erfolgt.

11. Computerprogramm zur Erzeugung eines Datensatzes, welcher in einem Verfahren zur Herstellung eines Brillenglases für die Brille verwendet wird,
**dadurch gekennzeichnet,**
**dass** das Computerprogramm dazu eingerichtet ist, um den Datensatz zu erzeugen, wobei der Datensatz mindestens die folgenden Datenwerte umfasst:
- räumliche Koordinaten eines Referenzpunktes am Auge (112, 112') des Nutzers;
- mindestens einen räumlichen Richtungsvektor zur Angabe mindestens einer Blickrichtung (120, 120') des Nutzers durch das Brillenglas; und
- eine räumliche Fassungsrandkurve (128, 128'),
wobei jeder der Datenwerte aus messtechnisch erfassten Werten oder aus vorhandenen Daten erzeugt wird.

12. Computerprogramm nach dem vorangehenden Anspruch, **dadurch gekennzeichnet, dass** der Datensatz zusätzliche Informationen umfasst, wobei sich die zusätzlichen Informationen auf mindestens eine Korrektur der Datenwerte beziehen, wobei die zusätzlichen Informationen als mindestens ein weiterer Datenwert in den Datensatz aufgenommen werden oder wobei die zusätzlichen Informationen in mindestens einem der Datenwerte des Datensatzes einbezogen werden.

13. Verfahren (160) zur Herstellung eines Brillenglases, wobei die Herstellung des Brillenglases durch Bearbeitung eines Brillenglasrohlings erfolgt, wobei der Brillenglasrohling anhand von Zentrierdaten bearbeitet wird, wobei die Zentrierdaten aus einem Datensatz ermittelt werden,
**dadurch gekennzeichnet,**
**dass** der Datensatz mindestens die folgenden Datenwerte umfasst:
- räumliche Koordinaten eines Referenzpunktes am Auge (112, 112') des Nutzers;
- mindestens einen räumlichen Richtungsvektor zur Angabe mindestens einer Blickrichtung (120, 120') des Nutzers durch das Brillenglas; und
- eine räumliche Fassungsrandkurve (128, 128').

14. Verfahren (160) nach dem vorangehenden Anspruch, **dadurch gekennzeichnet, dass** der Datensatz zusätzliche Informationen umfasst, wobei sich die zusätzlichen Informationen auf mindestens eine Korrektur der Datenwerte beziehen, wobei die zusätzlichen Informationen als mindestens ein weiterer Datenwert in den Datensatz aufgenommen werden oder wobei die zusätzlichen Informationen in mindestens einem der Datenwerte des Datensatzes einbezogen werden.

15. Verfahren (160) nach einem der beiden vorangehenden Ansprüche, **dadurch gekennzeichnet, dass** die Zentrierdaten ausgewählt sind aus mindestens einem der folgenden Zentrierwerte:
- Abstand (136, 136') des Hornhautscheitels des jeweiligen Auges (112, 112') zu einem Durchblickpunkt (132, 132') einer Blickrichtung (120, 120');
- Abstände der Durchblickpunkte (132, 132') zu Geraden (138, 138') durch innerste Punkte der Fassungsrandkurven (128, 128');
- Abstände der Durchblickpunkte (132, 132') zu Geraden (140, 140') durch unterste Punkte der Fassungsrandkurven (128, 128');
- horizontale Abstände von inneren und äußeren vertikalen Begrenzungen von die Fassungsrandkurven (128, 128') umschreibenden und in einer Scheibenebene (130, 130') liegenden Rechtecken eines Kastensystems (146, 146');
- vertikale Abstände von oberen und unteren horizontalen Begrenzungen der die Fassungsrandkurven (128, 128') umschreibenden und in der Scheibenebene (130, 130') liegenden Rechtecke des Kastensystems (146, 146');
- horizontale Abstände der Durchblickpunkte (132, 132') zu vertikalen Mittellinien (142, 142') des Kastensystems (146);
- vertikale Abstände der Durchblickpunkte (132, 132') zu horizontalen Mittellinien (142, 142') des Kastensystems (146);
- Abständen (136, 136') des Hornhautscheitels des jeweiligen Auges (112, 112') zur Scheibenebene (148);
- Winkel zwischen Scheibenebenen (130, 130') und der Fassungsebene (148);
- Winkel, um den die Fassungsebene (148) nach vorne aus einer Senkrechten geneigt ist.
